# EUROPEAN PATENT APPLICATION

(11) **EP 4 701 072 A1**
(43) Date of publication of application: **25.02.2026**
(21) Application number: 24382917.3
(22) Date of filing: 19.08.2024
(51) Int. Cl.: H02S 20/32, F24S 30/425

(54) **SOLAR TRACKER WITH ORIENTATION CORRECTOR**

(71) Applicant: Soltec Innovations, S.L., 30500 Molina de Segura (ES)
(72) Inventor: ZWINGMANN, Bernd, Molina de Segura (ES); MORALES TORRES, Raúl, Molina de Segura (ES)
(74) Representative: Isern Patentes y Marcas S.L.

(57) **Abstract**

The present invention comprises: a torsion shaft (1); a support structure (2) supporting the torsion shaft (1); solar modules, fixed to the torsion shaft (1); drives to provide tracking rotation; and an orientation corrector including at least one correction device (4), with: an arm (5) rigidly joint to the torsion shaft (1) and extending from said torsion shaft (1); and at least one gas spring (6) connected to the support structure (2) and to the corresponding arm (5), such that a rotation of the arm (5) causes the gas spring (6) to act eccentrically on the torsion shaft (1), generating a force that opposes the effect exerted on said torsion shaft (1) by the weight of the modules. It allows the rotation of the modules to be made uniform, preventing distortions with respect to a nominal value.

## Description

### Technical field of the invention

The present invention can be included within the field of solar energy, namely, in the field of solar trackers, particularly, although not exclusively, in photovoltaic type solar trackers. More specifically, the object of the invention relates to a solar tracker that includes a gas-spring based orientation corrector to mitigate the influence that the torsion of the tracker shaft has on the precision of the orientation of the solar modules.

### Background of the invention (state of the art)

The torsion shaft of a solar tracker has finite torsional stiffness. Accordingly, a longer length of the torsion shaft in turn implies greater deformation of said torsion shaft under torsional stresses. Torsional stresses can come, for example, from the weight of modules mounted with their centre of gravity being eccentric with respect to the torsion shaft. This deformation results in the angular position of the modules exhibiting an error with respect to the established nominal value at which the tracker is oriented, where said error increases with the distance, measured along the torsion shaft, of the modules with respect to the drive that produces the rotation of the torsion shaft. For example, if the tracker is nominally rotated at 40° at a given time, the modules closest to the drive maintain an orientation very close to 40°, but the successively more distant modules are affected by the orientation error, acquiring progressively increasing orientations of 41°, 42°, 43°, etc., that is, they acquire an orientation error that increases until reaching a maximum error in the modules furthest away from the drive. The fact that only the modules closest to the drive are correctly oriented reduces the capture efficiency of the tracker, with the corresponding losses.

### Summarised description of the invention

In order to overcome the aforementioned drawbacks, the present invention describes a solar tracker provided with an orientation corrector, based on one or more gas springs, according to independent claim 1. Other optional advantageous features are described in dependent claims and in the detailed description of a preferred embodiment.

The tracker of the invention allows the rotation of the modules to be made uniform, preventing distortions with respect to a nominal value, so that not just the modules closest to the drive are correctly oriented.

### Brief description of the figures

The advantages mentioned above, as well as other advantages and features of the present invention, will be better understood with reference to the following detailed description of a preferred embodiment in reference to the attached figures, which should be considered for purposes of illustration and not limitation, and in which:
Figure 1 shows an exemplary embodiment of the correction device that is part of the orientation corrector of Figure 1, with a tension-type gas spring.
Figure 2 shows an exemplary embodiment of the correction device that is part of the orientation corrector of Figure 1, with a compression-type gas spring.
Figure 3 shows an example of the correction device with two tension gas springs, one on each side of the torsion shaft.
Figure 4 shows an example in which the correction device includes two gas springs, one for tension and the other one for compression, within one same casing.
Figure 5 shows a schematic sectional side view of the correction device of Figure 4.
Figure 6 shows an additional example of the use of a compression-type gas spring operating from a tensile force.

### Reference list

- 1: Torsion shaft
- 2: Support structure, piles
- 3: Ground
- 4: Correction devices
- 5: Arm
- 6: Gas springs
- 7: Guide slot, elongated hole
- 8: Connection element
- 9: Connection mechanism
- 10: First chamber
- 11: Second chamber
- 12: Intermediate chamber
- 13: Cylinders

### Detailed description of a preferred exemplary embodiment of the invention

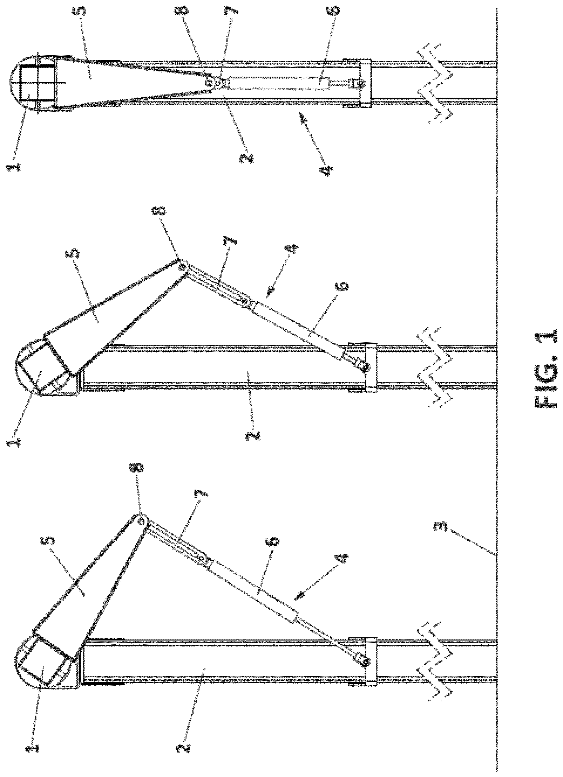

The following is a detailed description, with the help of the attached figures 1-6 mentioned above, of a preferred exemplary embodiment of the solar tracker with orientation corrector according to the present invention.

The tracker described in the present embodiment is preferably a photovoltaic tracker which, as shown in figures 1-4, comprises a torsion shaft (1) defining a longitudinal direction, and a support structure (2) on which the torsion shaft (1) is supported. The support structure (2) may include a plurality of piles (2) driven into the ground (3). The tracker also comprises photovoltaic solar modules (not depicted) fixed to the torsion shaft (1), as well as one or more drives (not shown) fixed to the support structure (2), and they provide the torsion shaft (1) with rotation, referred to as tracking rotation, to provide the modules with variable orientation.

The tracker also includes, as illustrated by means of figures 1-6, an orientation corrector including at least one correction device (4), which has: an arm (5) rigidly joint to the torsion shaft (1), and extending from said torsion shaft (1); and one or more gas springs (6) connected both to the support structure (2), for example to a corresponding one of the piles (2), as well as to the corresponding arm (5), such that a rotation of the arm (5) causes the gas spring (6) to act eccentrically on the torsion shaft (1), generating a force that opposes the effect exerted on said torsion shaft (1) by the part of the weight of the modules that is eccentric to the torsion shaft (1). Specifically, the arm (5) provides a spacing between the longitudinal direction of the torsion shaft (1) and a direction of action defined by the gas spring (6), thereby allowing the gas spring (6) to exert an eccentric force on the torsion shaft (6) that produces a torsional moment that opposes and, therefore, counteracts, at least in part, the torsional moment produced by the weight of the modules, such that the modules furthest away from the drive maintain an orientation closer to the nominal orientation of the torsion shaft (1).

The correction device (4) is more effective if it is located in positions further away from the drive. However, it can be designed with characteristics such that, to exert the required torque, it is only necessary to have either one single correction device (4), or several correction devices (4) located in suitable positions.

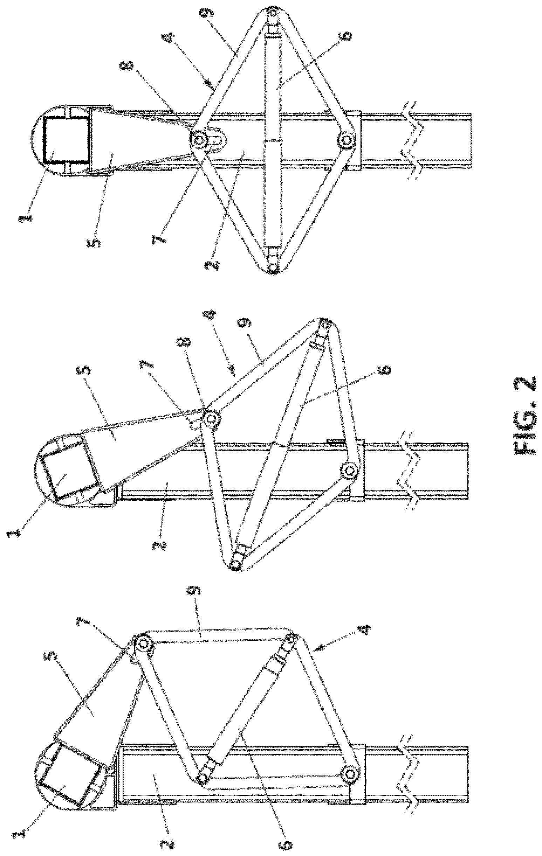

As will be explained later in light of figures 1 and 2, the gas spring (6) can be configured to work under tension (that is, to exert force when it is pulled), see figure 1, or under compression (that is, to exert force when it is compressed), see figure 2. In this way, the gas spring (6) is connected to the arm (5) and to the support structure (2) in such a way that, depending on the type of gas spring (6), the rotation of the arm (5) produces tension or compression, respectively, of the gas spring (6).

Preferably, the gas spring (6), whether a tension or compression gas spring (6), is connected to the arm (5) such that, in a predetermined range of movement of the arm (5), no action is transferred to the gas spring (6). That is, there is a certain range of rotation of the torsion shaft (1) in which the gas spring (6) is not activated. For this purpose, the correction device (4) includes a connection, which connects the gas spring (6) and the arm (5), allowing that, in a predetermined range, the rotation of the arm (5) does not produce any action on the gas spring (6), that is, the rotation of the arm (5) is not transmitted as tension or compression to the gas spring (6). According to the example depicted, the connection includes a guide slot (7), for example and elongated hole (7) and a connection element (8) that is movable along the guide slot (7), and which, in collaboration, are intended to absorb relative movement between the arm (5) and the gas spring (6).

Figure 1 shows a correction device with a tension-type gas spring (6), which is connected at a first end to the arm (5), while at a second end it is fixed to the support structure (2), for example, to one of the piles (2). The guide slot (7) is located at the first end of the gas spring (6), while the connection element (8) belongs to the arm (5). In this way, the gas spring (6) does not start to act until the arm (5) reaches a predetermined threshold position, such that the effect of the gas spring (6) is not excessive in relation to the effect caused by the weight of the modules. When the gas spring (6) is retracted (figure 1, on the right) it does not generate any force. The gas spring (6) starts to act at approximately 30° (figure 1, in the centre), according to the example depicted.

Figure 2, in turn, shows a correction device (4) with a compression-type gas spring (6). The correction device (4) additionally comprises a connection mechanism (9) which connects the gas spring (6) to the support structure (2), for example, to one of the piles (2), and to the arm (5). In this case, contrary to the case in figure 1, the guide slot (7) is made in the arm (5), while the connection element (8) is part of the connection mechanism (9). More specifically, in the example depicted in Figure 2, the connection mechanism (9) is an articulated polygon with at least four sides which, at two non-contiguous vertices, is attached to the ends of the gas spring (6), while at two other, also non-contiguous, vertices, it is attached to the support structure (2), such as, for example, to one of the piles (2), and to the arm (5). In the embodiment depicted in Figure 2, the articulated polygon is an articulated quadrilateral. The articulated polygon, specifically the articulated quadrilateral, converts the rotation of the arm (5) into compression of the gas spring (6). When the gas spring (6) is extended, it does not generate any force (figure 2, on the right). The gas spring (6) begins to compress when the arm (5) reaches a predetermined threshold position, and the connection element (8) has already completely moved through the guide slot (7) (figure 2, in the centre).

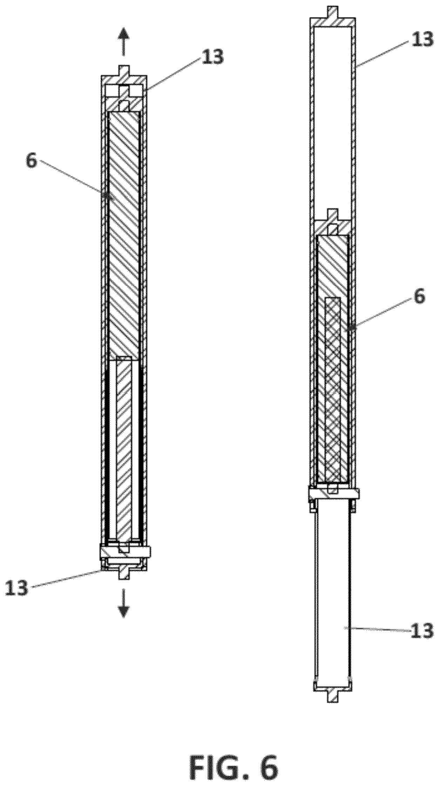

It is preferable to use compression-type gas springs (6), as they are more robust and more economical. Various embodiments that include a compression-type gas spring (6), with greater or lesser complexity, are contemplated. For example, Figure 6 shows a gas spring (6) mounted on a set of cylinders (13), and/or other connectors, in such a way that by applying a tensile force on the ends in the direction and sense of the vertical arrows, a compression is generated in the gas spring (6) mounted therein. In this way, the advantages mentioned for compression-type gas springs (6) are used in applications where tensile forces are present. In general, as will be explained in a later embodiment, sense-of-force reversing mechanisms, such as the above set of cylinders (13) or other alternatives, can be used to produce compression forces on a compression-type gas spring (6) from tensile forces, or vice versa, that is, to produce tensile forces on a tension-type gas spring (6) from compression forces.

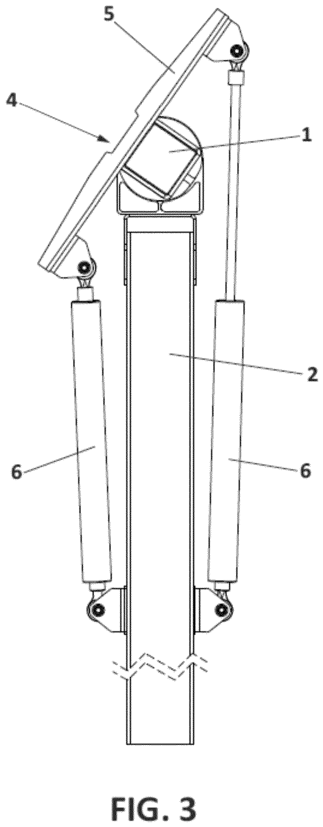

The correction device (4) may include two gas springs (6) arranged on opposite sides of the torsion shaft (1) to act before noon (that is, when the tracker is facing east) and after noon, when the tracker is facing west, respectively. More specifically, figure 3 shows two gas springs (6) of the same type, for example, tension-type gas springs (6), connected to one same arm (5), such that the movement of either of the two gas springs (6) is transmitted in a complementary manner to the other gas spring (6), that is, when the gas spring (6) on the right it is under tension, the gas spring (6) on the left is under compression, and vice versa. In the particular example depicted in figure 3, the connection connecting the gas spring (6) and the arm (5) is not configured, in a given range of rotation of the torsion shaft (1), to prevent transmitting tension or compression to the gas spring (6) from the arm (5). Namely, in the example in figure 3, a guide groove (7) and a connection element (8) are not necessarily provided.

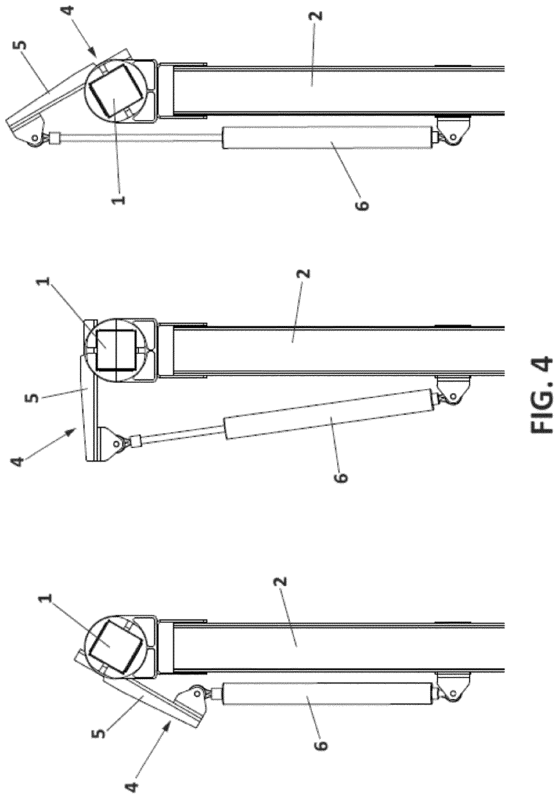

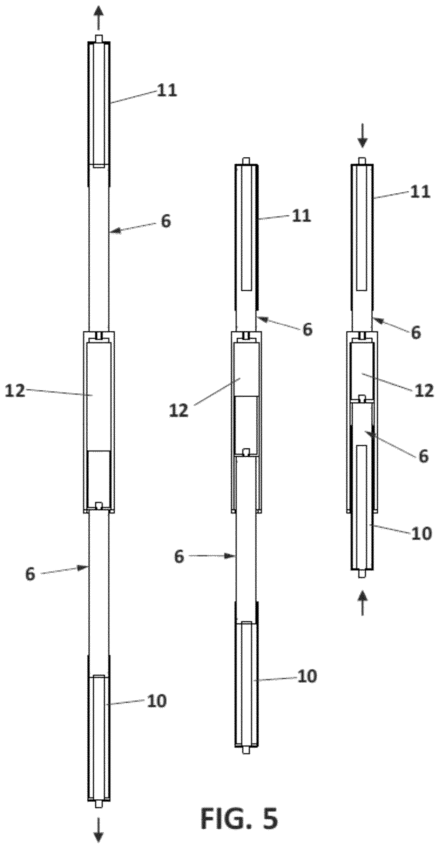

According to another preferred embodiment, shown in Figures 4 and 5, a correction device (4) that acts both in the morning and in the afternoon can be obtained, without the need to arrange separate gas springs (6) on both sides of the torsion shaft (1). In particular, figures 4 and 5 show a connection device (4) with two gas springs (6), one (in the lower part) being a tension-type gas spring (6), with a first chamber (10), and the other (in the upper part) being a compression-type gas spring (6), with a second chamber (11), both gas springs (6) being connected to one same common intermediate chamber (12). In particular, on the right side of figure 4 and on the left side of figure 5, it can be seen that the compression-type upper gas spring (6) is acting, while the tension-type lower gas spring (6) is not loaded. However, in the central part of figures 4 and 5, it can be seen that neither of the two gas springs (6) is acting; additionally, on the left side of figure 4 and on the right side of figure 5, it is shown that the compression-type upper gas spring (6) is not acting, while the tension-type lower gas spring (6) is acting.

In the previous example, the same effect can be achieved by using some sense-of-force reversing mechanism, as explained above with the help of figure 6. Specifically, instead of two gas springs (6) where one is a tension-type gas spring (6) and the other is a compression-type gas spring (6), two gas springs (6) of the same type, either tension or compression gas springs (6), can be used, where one of them is mounted in cooperation with a sense-of-force reversing mechanism. In this way, one of the two gas springs (6) is configured to act in response to a tensile force and the other in response to a compressive force.

According to preferred embodiments compatible with the previous embodiments, the correction device (4) may further include one or more hydraulic dampers (not shown) to add in parallel the additional effect of hydraulic damping. In this way, the damper provides a hydraulic damping effect that acts throughout the entire stroke of the gas spring (6), while, additionally, the effect of the gas spring (6) also acts at one or both of the end portions of the stroke. More specifically, the hydraulic damper can be fixed, for example welded, to the gas spring (6) in parallel. In particular, the hydraulic damper preferably has the same dimensions (same minimum length and maximum length) as the gas spring (6) and also the same stroke, at least the same effective stroke length, that is, the section of the stroke in which action occurs. In the particular case of the embodiment illustrated in figures 4 and 5, the first chamber (10), the second chamber (11) and the intermediate chamber (12) are preferably at least partially filled with a fluid, generally oil, to function as dampers.

As is known, gas springs (6) has a characteristic defined as "progression" which is derived from the fact that gas springs (6) do not develop exactly the same force at all points of their stroke, but rather there is a certain slight variation. According to a preferred embodiment, the gas springs (6) include a proportion of liquid, such as oil, to increase the progression value, providing the gas spring (6) with a certain additional character as a hydraulic damper, which grows with the proportion of liquid. This effect allows, for example, to customise the point of the stroke or, in general, the range of the stroke, of the gas spring (6) in which greater force is desired.

## Claims

1. A solar tracker with orientation corrector, **characterised in that** it comprises:
- a torsion shaft (1) defining a longitudinal direction;
- a support structure (2) on which the torsion shaft (1) is supported;
- solar modules fixed to the torsion shaft (1);
- one or more drives, fixed to the support structure (2), to provide the torsion shaft (1) with tracking rotation, to provide the modules with variable orientation; and
- an orientation corrector including at least one correction device (4) including:
- an arm (5) rigidly joint to the torsion shaft (1) and extending from said torsion shaft (1); and
- one or more gas springs (6) connected to the support structure (2) and to the corresponding arm (5), such that a rotation of the arm (5) causes the gas spring (6) to act eccentrically on the torsion shaft (1), generating a force and a torque that oppose the effect exerted on said torsion shaft (1) by a component of the weight of the modules that is eccentric to said torsion shaft (1).

2. The solar tracker according to claim 1, wherein the correction device (4) includes a connection which connects the gas spring (6) and the arm (5), allowing that, in a predetermined range, the rotation of the arm (5) does not produce any action on the gas spring (6).

3. The solar tracker according to claim 2, wherein the connection includes a guide slot (7) and a connection element (8) that is movable along the guide slot (7), and which, in collaboration, are intended to absorb relative movement between the arm (5) and the gas spring (6).

4. The solar tracker according to claim 3, wherein the gas spring (6) is a tension-type gas spring (6) which is configured to exert force when it is pulled, and which is connected at one end to the arm (5) and at the other end to the support structure (2), to transform the action of the gas spring (6) into the force and torque acting on the torsion shaft (1), wherein the guide slot (7) is located at the first end of the gas spring (6), while the connection element (8) belongs to the arm (5).

5. The solar tracker according to claim 3, wherein the gas spring (6) is a compression-type gas spring (6) which is configured to exert force when compressed; wherein the correction device (4) further comprises a connection mechanism (9) which connects the gas spring (6) to the support structure (2) and to the arm (5), to transform the action of the gas spring (6) into the force and torque acting on the torsion shaft (1); the guide slot (7) being made in the arm (5), while the connection element (8) is part of the connection mechanism (9).

6. The solar tracker according to claim 5, wherein the connection mechanism (9) is an articulated polygon with at least four sides, such as an articulated quadrilateral which, at two non-contiguous vertices, is attached to the ends of the gas spring (6), while at other two, also non-contiguous, vertices, it is attached to the support structure (2) and to the arm (5) to convert the rotation of the arm (5) into compression of the gas spring (6).

7. The solar tracker according to any of claims 1-6, wherein the correction device (4) includes two gas springs (6) arranged on opposite sides of the torsion shaft (1) to act before noon and after noon, respectively.

8. The solar tracker according to claim 7, wherein the two gas springs (6) are of the same type (tension or compression) and are connected to one same arm (5), such that the movement of either of the two gas springs (6) is transmitted in a complementary manner to the other gas spring (6).

9. The solar tracker according to any of claims 1-6, wherein the correction device (4) comprises:
- two gas springs (6) configured for one to act in response to compression force and the other one in response to tensile force;
- a first chamber (10) and a second chamber (11), each being part of one of the two gas springs (6); and
- a third common intermediate chamber (12) to which the two gas springs (6) are connected.

10. The solar tracker according to claim 9, wherein the two gas springs (6) comprise:
- a tension-type gas spring (6), including the first chamber (10); and
- a compression-type gas spring (6), including the second chamber (11).

11. The solar tracker according to claim 9, wherein the two gas springs (2) comprise gas springs (6) of the same type, whether tension or compression gas springs (6);
the correction device (4) additionally comprising a sense-of-force reversing mechanism connected to one of the gas springs (6), to cause the action of said gas spring (6) in response to a force in the direction opposite to its type.

12. The solar tracker according to any of claims 9-11, wherein the tension chamber (10), compression chamber (11) and intermediate chamber (12) are at least partially filled with a fluid to function as dampers.

13. The solar tracker according to any of claims 1-6, wherein the correction device (4) further includes one or more hydraulic dampers to add the additional hydraulic damping effect in parallel, such that the hydraulic damper provides a hydraulic damping effect that acts throughout the entire stroke of the gas spring (6), while, additionally, the effect of the gas spring (6) also acts at one or both end portions of the stroke.

14. The solar tracker according to claim 13, wherein the correction device (4) includes a damper fixed to the gas spring (6) in parallel, wherein the hydraulic damper has the same effective stroke length and the same dimensions (same minimum length and same maximum length) as the gas spring (6).

15. The solar tracker according to claims 1-8, wherein the gas springs (6) include a proportion of liquid, such as oil, to provide the gas spring (6) with greater progression.
